# EUROPÄISCHE PATENTSCHRIFT

(11) **EP 2 698 303 B1**
(45) Veröffentlichungstag und Bekanntmachung des Hinweises auf die Patenterteilung: **26.12.2018**
(21) Anmeldenummer: 13176722.0
(22) Anmeldetag: 16.07.2013
(51) Int. Cl.: B62D 6/00, B62D 5/04

(54) **Verfahren und Vorrichtung zur Überwachung einer Bestimmung eines Unterstützungsmoments**
Method and device for monitoring a determination of a supporting torque
Procédé et dispositif de surveillance d'une détermination d'un moment de soutien

(30) Priorität: 27.07.2012 DE 102012014911
(43) Veröffentlichungstag der Anmeldung: 19.02.2014
(73) Patentinhaber: Volkswagen Aktiengesellschaft, 38440 Wolfsburg (DE)
(72) Erfinder: Dreyer, Dirk, 31655 Stadthagen (DE); Zientek, Jens, 39365 Sommersdorf (DE); Cisterna, Luis Alberto, 38106 Braunschweig (DE); Schwertmann, Thilo, 38444 Wolfsburg (DE)

(56) Entgegenhaltungen:
- WO-A1-01/47762
- DE-A1-102009 055 939
- DE-A1-102010 043 915

## Beschreibung

Die Erfindung betrifft ein Verfahren und eine Vorrichtung zur Bestimmung eines Unterstützungsmoments in einem Lenksystem. In modernen Kraftfahrzeugen werden in der Regel so genannte Servolenkungen eingesetzt. In diesen Servolenkungen wird mittels eines geeigneten Aktors ein Unterstützungsmoment erzeugt, welches einen Kraftfahrzeugsführer bei Lenkmanövern unterstützt. Geeignete Aktoren können elektromechanische Aktoren, z.B. Elektromaschinen, oder hydraulische Aktoren sein.

Ein Unterstützungsmoment kann u.a. in Abhängigkeit eines so genannten Handlenkmoments bestimmt werden, wobei das Handlenkmoment ein von einem Kraftfahrzeugführer z.B. mittels einer Lenkhandhabe, insbesondere eines Lenkrades, auf eine Lenksäule aufgebrachtes Moment bezeichnet. Dieses ist z.B. mittels eines geeigneten Drehmomentsensors, welcher z.B. in oder an der Lenksäule angeordnet sein kann, erfassbar. Ein funktionaler Zusammenhang zwischen einem erfassten Handlenkmoment und einem zu erzeugenden Soll-Unterstützungsmoment kann in Form einer so genannten Unterstützungsfunktion gegeben sein. Beispielsweise kann die Unterstützungsfunktion in Form einer Kennlinie z.B. in einer Speichereinrichtung gespeichert sein, wobei eine Bestimmung des (Soll-)Unterstützungsmoments mittels einer Auswertung der Kennlinie erfolgt.

Bekannt ist auch, dass einem Kraftfahrzeugführer eine so genannte Lenkmomentempfehlung gegeben werden kann. Diese Lenkmomentempfehlung wird z.B. durch ein Bestimmen und ein Erzeugen eines Zusatzmomentes gegeben, welches z.B. auf die Lenksäule derart aufgebracht wird, dass der Kraftfahrzeugführer haptisch zur Aufbringung eines geeigneten Handlenkmoments angeregt wird. Die Lenkmomentempfehlung ist hierbei derart ausgelegt, dass sich ein unkritisches Moment für einen unkritischen Lenkwinkel einstellt, falls der Kraftfahrzeugführer die Hände von der Lenkhandhabe nimmt. Wenn der Kraftfahrzeugführer die Hände an der Lenkhandhabe hat, kann er die Lenkmomentempfehlung in Form eines unterstützenden oder entgegenwirkenden Momentes spüren.

Das Unterstützungsmoment sowie das Zusatzmoment können beispielsweise auf die Lenksäule oder eine Lenkzahnstange aufgebracht werden, wobei die Lenkzahnstange mechanisch über ein Getriebe mit der Lenksäule gekoppelt ist.

Die EP 1 946 992 A2 beschreibt ein Verfahren für den Betrieb einer elektrischen Servolenkung für ein Kraftfahrzeug mit einer Lenkhandhabe, einem elektrischen Servomotor, einem Lenkgetriebe, welches ein an der Lenkhandhabe eingeleitetes Lenkmoment und ein vom Servomotor aufgebrachtes Motormoment zur Erzeugung einer Lenkbewegung überlagert. Weiter erhält eine elektronische Steuer-/Regeleinheit als Eingangsgröße eine Information, die geeignet zur Beschreibung eines Lenkwinkels und geeignet zur Beschreibung eines im Lenkstrang wirkenden Lenkmoments ist. Die elektronische Steuer-/Regeleinheit bestimmt eine Sollvorgabe für das vom Servomotor aufzubringende Unterstützungsmoment, wobei im Falle einer als fehlerhaft diagnostizierten Lenkmomentinformation die Sollvorgabe für das Unterstützungsmoment in Abhängigkeit der Lenkwinkelinformation beeinflusst wird.

Die EP 1 568 572 A2 beschreibt ein Verfahren zum Betrieb eines Lenksystems für ein Kraftfahrzeug mit wenigstens einem lenkbaren Rad, wobei eine durch den Fahrer des Kraftfahrzeugs initiierte Lenkbewegung und/oder weitere fahrzeugspezifische Parameter, insbesondere die Fahrzeuggeschwindigkeit, als Eingangssignale von einem Steuergerät empfangen werden und daraus ein Steuersignal zur Erzeugung der Lenkbewegung des lenkbaren Rades, insbesondere zur Realisierung von Nutzanwendungen, ermittelt wird. Hierbei wird durch ein Sicherheitsüberwachungsverfahren des Lenksystems eine Überwachung der Eingangssignale des Steuergeräts mittels Sicherheitsfunktionen durchgeführt. Hierbei werden in einem ersten Schritt die Eingangssignale mit elektronikabhängigen Sicherheitsfunktionen und in einem zweiten Schritt zusätzlich mit anwendungsbezogenen Sicherheitsfunktionen plausibilisiert, wobei für wenigstens ein Eingangssignal ein Zustand bestimmt wird, anhand dessen die Nutzanwendungen des Lenksystems konfiguriert werden.

Die US 2008/0015751 A1 offenbart ein Sicherheitsverfahren zur Überwachung eines Lenksystems eines Kraftfahrzeugs mit einer elektrischen Lenkunterstützung zur Detektion von Instabilitäten und potentiell gefährlichen Fehlfunktionen mit folgenden Prozessschritten: Bestimmung zumindest einer Mess- und Kontrollgröße eines Lenkzuges, Bestimmung zumindest einer Mess- und Kontrollgröße eines dynamischen Fahrsystems und Vergleich der bestimmten Größen und Prüfung einer Plausibilität. In einem weiteren Schritt erfolgt ein Reagieren und ein Ändern der Lenkung in einen Sicherheitsstatus im Falle einer exzessiven Abweichung der bestimmten Größen von Standardgrößen.

WO 01/47762 offenbart den Oberbegriff der Ansprüche 1 und 2, 7 und 8.

Es stellt sich das technische Problem, ein Verfahren und eine Vorrichtung zur Überwachung einer Bestimmung eines Zusatzmomentes zu schaffen, wobei das Zusatzmoment zur Erzeugung einer Lenkmomentempfehlung in einem Lenksystem dient, welche eine zuverlässige, rasche und ein Betrieb des Lenksystems nicht beeinträchtigende Überprüfung der Bestimmung des Zusatzmoments ermöglichen.
Die Lösung des technischen Problems ergibt sich durch die Gegenstände mit den Merkmalen der Ansprüche 1 und 2 sowie 7 und 8. Weitere vorteilhafte Ausgestaltungen der Erfindung ergeben sich aus den Unteransprüchen.
Vorgeschlagen wird ein Verfahren zur Überwachung einer Bestimmung eines Zusatzmomentes. Das Zusatzmoment dient einer Erzeugung einer Lenkmomentempfehlung in einem Lenksystem, z.B. eines Kraftfahrzeuges. Das Lenksystem kann z.B. einen Aktor zur Erzeugung eines Unterstützungsmoments umfassen, welches erzeugt wird, um einen Kraftfahrzeugführer bei einer Durchführung von Lenkmanövern zu unterstützen. Das Unterstützungsmoment kann hierbei u.a. in Abhängigkeit eines Handlenkmoments bestimmt werden. Das Handlenkmoment bezeichnet hierbei ein Moment, welches ein Kraftfahrzeugführer z.B. mittels einer Lenkhandhabe, z.B. mittels eines Lenkrades, auf das Lenksystem, beispielsweise eine Lenksäule des Lenksystems, aufbringt.
In einem ersten Durchlauf wird das Handlenkmoment, welches der Kraftfahrzeugführer aufbringt, erfasst. Das Handlenkmoment kann hierbei mittels einer Einrichtung zur Erfassung des Handlenkmoments, beispielsweise eines Drehmomentsensors, erfasst werden. Der erste Durchlauf bezeichnet hierbei eine Abfolge von Verfahrensschritten zur Bestimmung eines Soll-Unterstützungsmoments, welches z.B. mittels des vorhergehend erläuterten Aktors auf das Lenksystem aufgebracht werden kann.
Weiter wird ein erstes Zusatzmoment bestimmt. Das Zusatzmoment kann beispielsweise mittels einer Einrichtung zur Bestimmung des Zusatzmomentes bestimmt werden. Beispielsweise kann ein Steuergerät zur Steuerung von Bremsvorrichtungen eine z.B. auf eine aktuelle Fahrsituation angepasste Lenkmomentempfehlung bestimmen und in deren Abhängigkeit das erste Zusatzmoment bestimmen. Das erste Zusatzmoment dient hierbei also der Erzeugung einer gewünschten Lenkmomentempfehlung. Die Lenkmomentempfehlung kann hierbei abhängig von einer aktuellen Fahrsituation des Kraftfahrzeuges sein. Das Zusatzmoment kann derart z. B. auf eine Lenksäule oder eine Lenkzahnstange aufgebracht werden, dass der Kraftfahrzeugführer das seiner Lenkbewegung entgegenwirkende oder seine Lenkbewegung unterstützende Zusatzmoment haptisch z. B. an der Lenkhandhabe erfassen kann. Das Zusatzmoment wird hierbei dem in Abhängigkeit des Handmoments bestimmten Unterstützungsmoment überlagert, woraus sich ein resultierendes Soll-Unterstützungsmoment ergibt.

Weiter wird ein erstes Soll-Unterstützungsmoment mittels einer Unterstützungsfunktion in Abhängigkeit einer Summe des Handlenkmoments und des ersten Zusatzmoments bestimmt. Eine Eingangsgröße der Unterstützungsfunktion ist hierbei also eine Summe des erfassten Handlenkmoments und des bestimmten ersten Zusatzmoments. In Abhängigkeit dieser Eingangsgröße kann mittels der Unterstützungsfunktion als Ausgangsgröße das Soll-Unterstützungsmoment bestimmt werden. Die Unterstützungsfunktion kann hierbei beispielsweise in Form einer Kennlinie gegeben sein, wobei die Kennlinie einen Zusammenhang zwischen einem Eingangsmoment und dem Soll-Unterstützungsmoment als Ausgangsmoment repräsentiert oder codiert. Hierbei wird also das erste Zusatzmoment als so genannter Offset auf das erfasste Handlenkmoment aufgeschlagen und über die Unterstützungsfunktion geführt.

Erfindungsgemäß wird in einem weiteren Durchlauf zur Bestimmung eines Soll-Unterstützungsmoments ein weiteres Soll-Unterstützungsmoment mittels der Unterstützungsfunktion in Abhängigkeit ausschließlich des Handlenkmoments bestimmt. In diesem Fall bildet ausschließlich das Handlenkmoment die Eingangsgröße der Unterstützungsfunktion. Als Ausgangsgröße wird daher ein weiteres Soll-Unterstützungsmoment ausschließlich in Abhängigkeit des Handlenkmoments bestimmt.

Das Handlenkmoment kann hierzu erneut erfasst werden. Auch ist es vorstellbar, dass in dem ersten Durchlauf erfasste Handlenkmoment z.B. in einer Speichereinrichtung zu speichern und dann, wie vorhergehend erläutert, zur Bestimmung des weiteren Soll-Unterstützungsmoments zu nutzen.

Weiter wird eine Differenz zwischen dem weiteren Soll-Unterstützungsmoment und dem ersten Soll-Unterstützungsmoment bestimmt. Hierzu kann das erste Soll-Unterstützungsmoment beispielsweise in einer Speichereinrichtung gespeichert werden. Eine Fehlfunktion wird detektiert, falls die Differenz größer als ein vorbestimmter Schwellwert ist. Der vorbestimmte Schwellwert kann hierbei z.B. mittels von Versuchen bestimmt werden. Auch kann der Schwellwert fahrzeugabhängig und/oder lenksystemabhängig gewählt werden.

Die Unterstützungsfunktion kann hierbei derart ausgebildet sein, dass für mindestens eine Kombination eines Handlenkmoments und eines Zusatzmoments folgende Beziehung gilt: wobei HLM das Handlenkmoment und ZM das Zusatzmoment beschreibt. Insbesondere kann die Unterstützungsfunktion nichtlinear sein. Beispielsweise kann die Unterstützungsfunktion mehrere lineare Teilabschnitte mit voneinander verschiedenen Steigungen aufweisen. Somit ist es nicht möglich, einen Funktionswert, welcher in Abhängigkeit der Summe aus Handlenkmoment und Zusatzmoment bestimmt wird, in voneinander unabhängige Anteile zu zerlegen, die in Abhängigkeit ausschließlich des Handlenkmoments und in Abhängigkeit ausschließlich des Zusatzmoments erzeugt wurden. Somit ist es nicht möglich, ausschließlich aus einem bestimmten Soll-Unterstützungsmoment und einem erfassten oder bekannten Handlenkmoment die Höhe des Zusatzmoments zu bestimmen.

Das erfindungsgemäße Verfahren ermöglicht durch die Durchführung zweier Vorgänge zur Bestimmung des Soll-Unterstützungsmoments mit voneinander verschiedenen Eingangsgrößen in vorteilhafter Weise eine schnelle, zuverlässige und einfach zu implementierende Bestimmung eines Anteils eines Zusatzmoments an einem Soll-Unterstützungsmoment. Insbesondere entspricht die bestimmte Differenz zwischen dem weiteren und dem ersten Soll-Unterstützungsmoment dem Anteil am Soll-Unterstützungsmoment, der durch das Zusatzmoment erzeugt wird.

Erfindungsgemäß wird in dem ersten Durchlauf das erste Soll-Unterstützungsmoment als Summe eines ersten Anteils und eines weiteren Anteils bestimmt. Der erste Anteil wird in Abhängigkeit oder mittels einer Unterstützungsfunktion in Abhängigkeit einer Summe des Handlenkmoments und des ersten Zusatzmoments bestimmt. Weiter wird ein weiteres Zusatzmoment bestimmt. Der weitere Anteil des ersten Soll-Unterstützungsmoments wird dann als Produkt aus einem Verstärkungsfaktor und dem weiteren Zusatzmoment bestimmt.

In dem zweiten Durchlauf wird dann eine Differenz zwischen dem weiteren und dem ersten Soll-Unterstützungsmoment bestimmt, wobei eine Fehlfunktion detektiert wird, falls eine Summe aus der Differenz (zwischen dem weiteren und dem ersten Soll-Unterstützungsmoment) und dem weiteren Anteil des ersten Soll-Unterstützungsmoments größer als der vorbestimmte Schwellwert ist.

Hierbei wird eine Lenkmomentempfehlung durch zwei Anteile erzeugt. Ein erster Anteil wird in Abhängigkeit einer Summe des erfassten Handlenkmoments und des ersten Unterstützungsmoments als Eingangsgröße der Unterstützungsfunktion erzeugt. Ein zweiter Anteil wird durch Multiplikation des weiteren Zusatzmoments mit einem Verstärkungsfaktor erzeugt, wobei der erste Anteil und der zweite Anteil summiert werden, um das Soll-Unterstützungsmoment (das resultierende Soll-Unterstützungsmoment) zu erzeugen.

Das vorgeschlagene Verfahren ermöglicht in vorteilhafter Weise auch für eine derartige Erzeugung einer Lenkempfehlung die Bestimmung eines Anteils des Zusatzmoments an dem Soll-Unterstützungsmoment und somit eine zuverlässige, schnelle und einfach zu implementierende Überwachung der Bestimmung des Zusatzmoments.

In einer weiteren Ausführungsform ist das weitere Zusatzmoment gleich dem ersten Zusatzmoment. Hierdurch ergibt sich in vorteilhafter Weise eine einfache Erzeugung des resultierenden Soll-Unterstützungsmoments.

In einer weiteren Ausführungsform wird der erste Durchlauf zyklisch mit einer ersten Frequenz durchgeführt und der zweite Durchlauf zyklisch mit einer zweiten Frequenz durchgeführt, wobei die erste Frequenz höher als die zweite Frequenz ist. Der zweite Durchlauf wird, wenn er entsprechend der zweiten Frequenz durchgeführt wird, anstelle des ersten Durchlaufs durchgeführt. Somit wird mit einer ersten Frequenz das Soll-Unterstützungsmoment mittels der Verfahrensschritte des ersten Durchlaufs bestimmt. Mit vorbestimmten Zeitabständen, die von der zweiten Frequenz abhängen, wird das Soll-Unterstützungsmoment anstelle der Verfahrensschritte gemäß dem ersten Durchlauf mittels der Verfahrensschritte gemäß des zweiten Durchlaufs bestimmt. Somit tritt das gemäß der Verfahrensschritte des zweiten Durchlaufs bestimmte Soll-Unterstützungsmoment anstelle des gemäß der Verfahrensschritte des ersten Durchlaufs bestimmten Soll-Unterstützungsmoments. Somit kann sich eine Veränderung des Soll-Unterstützungsmoments ergeben. Da diese Veränderung nur mit einer Häufigkeit gemäß der zweiten Frequenz auftritt und aufgrund von Trägheiten im Lenksystem, sind haptische Einflüsse auf ein Lenkverhalten in vorteilhafter Weise minimal.

So ist z.B. vorstellbar, dass der erste Durchlauf mit einer Frequenz von 1.000 Hz durchgeführt wird. Hierbei wird also jede Millisekunde das Soll-Unterstützungsmoment mittels der Verfahrensschritte des ersten Durchlaufs bestimmt. Der zweite Durchlauf kann mit einer Frequenz von 50 Hz durchgeführt werden. Hierbei wird also alle 20 Millisekunden das Soll-Unterstützungsmoment mittels der Verfahrensschritte des zweiten Durchlaufs bestimmt. Dieses Soll-Unterstützungsmoment tritt zum entsprechenden Zeitpunkt an die Stelle des Soll-Unterstützungsmoments, welches mittels der Verfahrensschritte des ersten Durchlaufs bestimmt wurde. Hiernach wird das Soll-Unterstützungsmoment wiederum mittels der Verfahrensschritte des ersten Durchlaufs bestimmt.

In einer bevorzugten Ausführungsform beträgt die zweite Frequenz 50 Hz. Hierdurch wird in vorteilhafter Weise eine gute Abstimmung zwischen einer zuverlässigen Überwachung der Bestimmung des Zusatzmoments und zwischen haptischen Auswirkungen auf das Lenksystem erreicht.

In einer weiteren Ausführungsform wird das Soll-Unterstützungsmoment mittels der Unterstützungsfunktion ausschließlich in Abhängigkeit des Handlenkmoments bestimmt, falls eine Fehlfunktion detektiert wird. Hierdurch erfolgt quasi ein Wegschalten der Lenkempfehlung. Es ist somit in vorteilhafter Weise nicht notwendig, die gesamte Lenkunterstützung im Falle einer Fehlfunktion zu deaktivieren. Hierdurch ergibt sich in vorteilhafter Weise eine bessere Verfügbarkeit eines Servolenksystems im Falle einer fehlerhaften Bestimmung des Zusatzmoments.

Weiter vorgeschlagen wird eine Vorrichtung zur Überwachung einer Bestimmung eines Lenkmoments. Die Vorrichtung umfasst mindestens eine Einrichtung zur Erfassung eines Handlenkmoments, eine Einrichtung zur Bestimmung eines ersten Zusatzmoments, eine Einrichtung zur Bestimmung eines Soll-Unterstützungsmoments und eine Überwachungseinrichtung. In einem ersten Durchlauf ist ein Handlenkmoment mittels der Einrichtung zur Erfassung eines Handlenkmoments erfassbar. Weiter ist ein erstes Zusatzmoment mittels der Einrichtung zur Bestimmung mindestens eines Zusatzmomentes bestimmbar. Weiter ist ein erstes Soll-Unterstützungsmoment mittels der Einrichtung zur Bestimmung eines Soll-Unterstützungsmoments in Abhängigkeit einer Summe des Handlenkmoments und des ersten Zusatzmoments bestimmbar.

Erfindungsgemäß ist in einem weiteren Durchlauf mittels der Überwachungseinrichtung eine Differenz zwischen einem weiteren und dem ersten Soll-Unterstützungsmoment bestimmbar, wobei das weitere Soll-Unterstützungsmoment mittels der Einrichtung zur Bestimmung eines Soll-Unterstützungsmoments in Abhängigkeit ausschließlich des Handlenkmoments bestimmt wird. Eine Fehlfunktion ist detektierbar, falls die Differenz größer als ein vorbestimmter Schwellwert ist.

Die vorgeschlagene Vorrichtung ermöglicht in vorteilhafter Weise die Durchführung eines der vorhergehend erläuterten Verfahren.

Erfindungsgemäß ist in dem ersten Durchlauf ein weiteres Zusatzmoment und ein weiterer Anteil des ersten Soll-Unterstützungsmoments als Produkt aus einem Verstärkungsfaktor und dem weiteren Zusatzmoment bestimmbar, z.B. mittels der Einrichtung zur Bestimmung mindestens eines Zusatzmoments. Weiter ist das erste Soll-Unterstützungsmoment als Summe des ersten Anteils und des weiteren Anteils bestimmbar. Der erste Anteil ist in Abhängigkeit einer Summe des Handlenkmoments und des ersten Zusatzmoments bestimmbar. Weiter ist in dem zweiten Durchlauf eine Differenz zwischen dem weiteren und dem ersten Soll-Unterstützungsmoment bestimmbar, wobei eine Fehlfunktion detektierbar ist, falls eine Summe aus der Differenz (zwischen dem weiteren und dem ersten Soll-Unterstützungsmoment) und dem weiteren Anteil des ersten Soll-Unterstützungsmoments größer als der vorbestimmte Schwellwert ist.

Die vorgeschlagene Vorrichtung ermöglicht in vorteilhafter Weise eine zuverlässige, schnelle und einfach zu implementierende Überwachung der Bestimmung eines Zusatzmomentes, falls eine Lenkmomentempfehlung, wie vorhergehend geschildert, durch zwei Anteile erzeugt wird.

In einer weiteren Ausführungsform ist mittels der Vorrichtung der erste Durchlauf zyklisch mit einer ersten Frequenz und der zweite Durchlauf zyklisch mit einer zweiten Frequenz durchführbar, wobei die erste Frequenz höher als die zweite Frequenz ist, wobei der zweite Durchlauf anstelle des ersten Durchlaufs durchführbar ist.

Hierdurch ergibt sich in vorteilhafter Weise eine Vorrichtung, die eine zuverlässige Überwachung der Bestimmung eines Zusatzmoments ermöglicht und gleichzeitig haptische Auswirkungen auf das Lenksystem während der Überwachung reduziert.

Die Erfindung wird anhand eines Ausführungsbeispiels näher erläutert. Die Fig. zeigen:
- Fig. 1: ein schematisches Blockschaltbild einer Vorrichtung zur Überwachung einer Bestimmung eines Zusatzmoments,
- Fig. 2: ein schematisches Blockschaltbild eines Verfahrens zur Überwachung einer Bestimmung eines Zusatzmoments und
- Fig. 3: eine schematische Darstellung einer Kennlinie.

Nachfolgend bezeichnen gleiche Bezugszeichen Elemente mit gleichen oder ähnlichen technischen Eigenschaften.

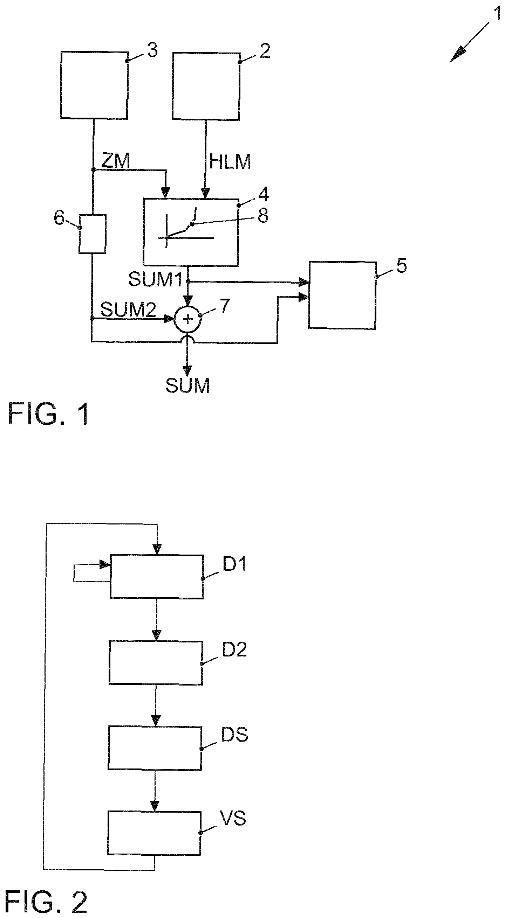

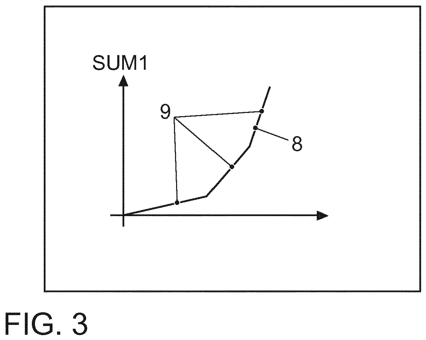

In Fig. 1 ist ein schematisches Blockschaltbild einer Vorrichtung 1 zur Überwachung einer Bestimmung eines Zusatzmoments ZM dargestellt. Die Vorrichtung 1 umfasst einen Drehmomentsensor 2 zur Erfassung eines Handlenkmoments HLM. Weiter umfasst die Vorrichtung 1 eine Einrichtung 3 zur Bestimmung eines Zusatzmoments ZM. Weiter umfasst die Vorrichtung 1 eine Einrichtung 4 zur Bestimmung eines ersten Anteils SUM1 eines Soll-Unterstützungsmoments SUM. Weiter umfasst die Vorrichtung 1 eine Überwachungseinrichtung 5. Dargestellt ist weiter eine Verstärkereinrichtung 6 und eine Summationseinrichtung 7. Der Drehmomentsensor 2 erfasst ein Handlenkmoment HLM. Die Einrichtung 3 bestimmt ein Zusatzmoment ZM. Die Einrichtung 4 bestimmt einen ersten Anteil SUM1 eines Soll-Unterstützungsmoments SUM mittels einer Unterstützungsfunktion 8 (siehe auch Fig. 3) in Abhängigkeit einer Summe des Handlenkmoments HLM und des Zusatzmoments ZM. Ein zweiter Anteil SUM2 des Soll-Unterstützungsmoments SUM wird durch eine Multiplikation des Zusatzmoments ZM mit einem Verstärkungsfaktor (nicht dargestellt) mittels der Verstärkereinrichtung 6 erzeugt. Das (resultierende) Soll-Unterstützungsmoment SUM wird durch eine Summation mittels der Summationseinrichtung 7 bestimmt. Eingangsgrößen der Überwachungseinrichtung 5 sind der erste Anteil SUM1 des Soll-Unterstützungsmoments SUM und der zweite Anteil SUM2 des Soll-Unterstützungsmoments SUM.

In Fig. 2 ist ein schematisches Blockschaltbild eines Verfahrens zur Überwachung einer Bestimmung eines Zusatzmoments ZM dargestellt. In einem ersten Durchlauf D1 wird ein Handlenkmoment HLM (siehe Fig. 1) erfasst und ein Zusatzmoment ZM bestimmt. Weiter wird ein erster Anteil SUM1 eines ersten Soll-Unterstützungsmoment SUMa in Abhängigkeit einer Summe des Handlenkmoments HLM und des Zusatzmoments ZM bestimmt.

Das erste Soll-Unterstützungsmoment SUMa wird dann als Summe des ersten Anteils SUM1 des ersten Soll-Unterstützungsmoments SUMa und eines weiteren Anteils SUM2 des Soll-Unterstützungsmoments SUMa bestimmt, wobei der weitere Anteil SUM2 des ersten Soll-Unterstützungsmoments SUMa als Produkt aus einem Verstärkungsfaktor und dem Zusatzmoment ZM bestimmt wird.

In einem weiteren Durchlauf D2 wird ein weiteres Soll-Unterstützungsmoment SUMb in Abhängigkeit ausschließlich des Handlenkmoments HLM bestimmt. In diesem Fall wird nur der erste Anteil SUM1 bestimmt und dieser nur in Abhängigkeit des Handlenkmoments HLM.

Weiter wird z. B. mittels der Überwachungseinrichtung 5 (siehe Fig. 1) in einem Differenzschritt DS eine Summe aus einer Differenz zwischen dem weiteren Soll-Unterstützungsmoment SUMb, welches im zweiten Durchlauf D2 bestimmt wurde, und dem ersten Soll-Unterstützungsmoment SUMa, welches im ersten Durchlauf D1 bestimmt wird, und dem weiteren Anteil SUM2 des ersten Soll-Unterstützungsmoments SUMa bestimmt. Eine Fehlfunktion wird in einem Vergleichsschritt VS detektiert, falls diese Summe größer als ein vorbestimmter Schwellwert ist.

In diesem Fall kann beispielsweise die in Fig. 1 dargestellte Überwachungseinrichtung 5 die Einrichtung 3 zur Bestimmung eines Zusatzmomentes deaktivieren.

In Fig. 3 ist schematisch eine Kennlinie 8 dargestellt, die eine erfindungsgemäße Unterstützungsfunktion repräsentiert. Hierbei ist dargestellt, dass die Kennlinie 8 aus mehreren linearen Teilabschnitten 9 besteht, die unterschiedliche Steigungen aufweisen.

In Fig. 2 ist auch dargestellt, dass der erste Durchlauf D1 wiederholt, z. B. mit einer Frequenz von 1000 Hz, und auch der zweite Durchlauf D2 sowie der Differenzschritt DS und Vergleichsschritt VS wiederholt, z. B. mit einer Frequenz von 50 Hz, durchgeführt wird.

### Bezugszeichenliste

- 1: Vorrichtung
- 2: Lenkmomentsensor
- 3: Einrichtung zur Bestimmung eines Zusatzmomentes
- 4: Einrichtung zur Bestimmung eines Soll-Unterstützungsmoments
- 5: Überwachungseinrichtung
- 6: Verstärkereinrichtung
- 7: Summationseinrichtung
- 8: Kennlinie
- 9: Teilabschnitt
- HLM: Handlenkmoment
- ZM: Zusatzmoment
- SUM1: erster Anteil
- SUM2: zweiter Anteil
- SUM: Soll-Unterstützungsmoment
- SUMa: erstes Soll-Unterstützungsmoment
- SUMb: weiteres Soll-Unterstützungsmoment
- D1: erster Durchlauf
- D2: zweiter Durchlauf
- DS: Differenzschritt
- VS: Vergleichsschritt

## Patentansprüche

1. Verfahren zur Überwachung einer Bestimmung eines Zusatzmoments (ZM), wobei in einem ersten Durchlauf (D1)
- ein Handlenkmoment (HLM) erfasst wird,
- ein erstes Zusatzmoment (ZM) bestimmt wird,
- wobei ein erstes Soll-Unterstützungsmoment (SUMa) mittels einer Unterstützungsfunktion in Abhängigkeit einer Summe des Handlenkmoments (HLM) und des ersten Zusatzmoments (ZM) bestimmt wird,
**dadurch gekennzeichnet, dass** in einem zweiten Durchlauf (D2)
- ein weiteres Soll-Unterstützungsmoment (SUMb) mittels der Unterstützungsfunktion in Abhängigkeit ausschließlich des Handlenkmoments (HLM) bestimmt wird,
- wobei eine Differenz zwischen dem weiteren Soll-Unterstützungsmoment (SUMb) und dem ersten Soll-Unterstützungsmoment (SUMa) bestimmt wird,
- wobei eine Fehlfunktion detektiert wird, falls die Differenz größer als ein vorbestimmter Schwellwert ist.

2. Verfahren zur Überwachung einer Bestimmung eines Zusatzmoments (ZM), wobei in einem ersten Durchlauf (D1)
- ein Handlenkmoment (HLM) erfasst wird,
- ein erstes Zusatzmoment (ZM) bestimmt wird,
**dadurch gekennzeichnet, dass**
ein erstes Soll-Unterstützungsmoment (SUMa) als Summe eines ersten Anteils (SUM1) und eines weiteren Anteil (SUM2) bestimmt wird,
wobei der erste Anteil (SUM1) mittels einer Unterstützungsfunktion in Abhängigkeit einer Summe des Handlenkmoments (HLM) und des ersten Zusatzmoments (ZM) bestimmt wird, wobei in dem ersten Durchlauf (D1) ein weiteres Zusatzmoment bestimmt wird, wobei der weitere Anteil (SUM2) des ersten Soll-Unterstützungsmoments (SUMa) als Produkt aus einem Verstärkungsfaktor und dem weiteren Zusatzmoment bestimmt wird,
wobei in einem zweiten Durchlauf (D2) ein weiteres Soll-Unterstützungsmoment (SUMb) mittels der Unterstützungsfunktion in Abhängigkeit ausschließlich des Handlenkmoments (HLM) bestimmt wird,
wobei in einem Differenzschritt (DS) eine Differenz zwischen dem weiteren Soll-Unterstützungsmoment (SUMb) und dem ersten Soll-Unterstützungsmoment (SUMa) bestimmt wird,
wobei eine Fehlfunktion in einem Vergleichsschritt (VS) detektiert wird, falls eine Summe aus der Differenz und dem weiteren Anteil (SUM2) des ersten Soll-Unterstützungsmoments (SUMa) größer als ein vorbestimmter Schwellwert ist.

3. Verfahren nach Anspruch 2, **dadurch gekennzeichnet, dass** das weitere Zusatzmoment gleich dem ersten Zusatzmoment (ZM) ist.

4. Verfahren nach einem der Ansprüche 1 bis 3, **dadurch gekennzeichnet, dass** der erste Durchlauf (D1) zyklisch mit einer ersten Frequenz durchgeführt wird und der zweite Durchlauf (D2) zyklisch mit einer zweiten Frequenz durchgeführt wird, wobei die erste Frequenz höher als die zweite Frequenz ist, wobei der zweite Durchlauf (D2) anstelle des ersten Durchlaufs (D1) durchgeführt wird.

5. Verfahren nach Anspruch 4, **dadurch gekennzeichnet, dass** die zweite Frequenz 50 Hz beträgt.

6. Verfahren nach einem der Ansprüche 1 bis 5, **dadurch gekennzeichnet, dass** das Soll-Unterstützungsmoment (SUM) mittels der Unterstützungsfunktion ausschließlich in Abhängigkeit des Handlenkmoments (HLM) bestimmt wird, falls eine Fehlfunktion detektiert wird.

7. Vorrichtung zur Überwachung einer Bestimmung eines Zusatzmoments (ZM), wobei die Vorrichtung (1) mindestens eine Einrichtung zur Erfassung eines Handlenkmoments (HLM), eine Einrichtung (3) zur Bestimmung mindestens eines Zusatzmoments (ZM), eine Einrichtung (4) zur Bestimmung eines Soll-Unterstützungsmoments (SUM) und eine Überwachungseinrichtung (5) umfasst, wobei in einem ersten Durchlauf (D1)
- ein Handlenkmoment (HLM) erfassbar ist
- ein erstes Zusatzmoment (ZM) bestimmbar ist,
- ein erstes Soll-Unterstützungsmoment (SUMa) in Abhängigkeit einer Summe des Handlenkmoments (HLM) und des ersten Zusatzmoments (ZM) bestimmbar ist,
**dadurch gekennzeichnet, dass**
- mittels der Überwachungseinrichtung (5) eine Differenz zwischen einem weiteren Soll-Unterstützungsmoment (SUMb) und dem ersten Soll-Unterstützungsmoment (SUMa) bestimmbar ist, wobei das weitere Soll-Unterstützungsmoment (SUMb) in einem zweiten Durchlauf (D2) in Abhängigkeit ausschließlich des Handlenkmoments (HLM) bestimmbar ist, wobei eine Fehlfunktion detektierbar ist, falls die Differenz größer als ein vorbestimmter Schwellwert ist.

8. Vorrichtung zur Überwachung einer Bestimmung eines Zusatzmoments (ZM), wobei die Vorrichtung (1) mindestens eine Einrichtung zur Erfassung eines Handlenkmoments (HLM), eine Einrichtung (3) zur Bestimmung mindestens eines Zusatzmoments (ZM), eine Einrichtung (4) zur Bestimmung eines Soll-Unterstützungsmoments (SUM) und eine Überwachungseinrichtung (5) umfasst, wobei in einem ersten Durchlauf (D1)
- ein Handlenkmoment (HLM) erfassbar ist
- ein erstes Zusatzmoment (ZM) bestimmbar ist,
**dadurch gekennzeichnet, dass** das erste Soll-Unterstützungsmoment (SUMa) als Summe eines ersten Anteils (SUM1) und eines weiteren Anteil (SUM2) bestimmbar ist, wobei der erste Anteil (SUM1) in Abhängigkeit einer Summe des Handlenkmoments (HLM) und des ersten Zusatzmoments (ZM) bestimmbar ist, wobei in dem ersten Durchlauf (D1) ein weiteres Zusatzmoment und ein weiterer Anteil (SUM2) des ersten Soll-Unterstützungsmoments (SUMa) als Produkt aus einem Verstärkungsfaktor und dem weiteren Zusatzmoment bestimmbar ist,
wobei in einem zweiten Durchlauf (D2) ein weiteres Soll-Unterstützungsmoment (SUMb) mittels der Unterstützungsfunktion in Abhängigkeit ausschließlich des Handlenkmoments (HLM) bestimmt wird
wobei in einem Differenzschritt (DS) eine Differenz zwischen dem weiteren Soll-Unterstützungsmoment (SUMb) und dem ersten Soll-Unterstützungsmoment (SUMa) bestimmbar ist,
wobei in einem Vergleichsschritt (VS) eine Fehlfunktion detektierbar ist, falls eine Summe aus der Differenz und dem weiteren Anteil (SUM2) des ersten Soll-Unterstützungsmoments (SUM) größer als ein vorbestimmter Schwellwert ist.

9. Vorrichtung nach einem der Ansprüche 7 oder 8, **dadurch gekennzeichnet, dass** mittels der Vorrichtung (1) der erste Durchlauf (D1) zyklisch mit einer ersten Frequenz und der zweite Durchlauf (D2) zyklisch mit einer zweiten Frequenz durchführbar ist, wobei die erste Frequenz höher als die zweite Frequenz ist, wobei der zweite Durchlauf (D2) anstelle des ersten Durchlaufs (D1) durchführbar ist.

## Claims

1. Method for monitoring the determination of an additional torque (ZM), wherein in a first pass (D1),
- a manual steering torque (HLM) is measured,
- a first additional torque (ZM) is determined,
- wherein a first setpoint assistance torque (SUMa) is determined by means of an assistance function in dependence on a sum of the manual steering torque (HLM) and the first additional torque (ZM),
**characterized in that** in a second pass (D2)
- a further setpoint assistance torque (SUMb) is determined by means of the assistance function in dependence exclusively on the manual steering torque (HLM),
- wherein a difference between the further setpoint assistance torque (SUMb) and the first setpoint assistance torque (SUMa) is determined, and
- wherein a malfunction is detected if the difference is greater than a predetermined threshold value.

2. Method for monitoring the determination of an additional torque (ZM), wherein in a first pass (D1)
- a manual steering torque (HLM) is measured,
- a first additional torque (ZM) is determined,
**characterized in that**
a first setpoint assistance torque (SUMa) is determined as a sum of a first component (SUM1) and a further component (SUM2),
wherein the first component (SUM1) is determined by means of an assistance function in dependence on a sum of the manual steering torque (HLM) and of the first additional torque (ZM), wherein in the first pass (D1) a further additional torque is determined, wherein the further component (SUM2) of the first setpoint assistance torque (SUMa) is determined as a product of a gain factor and of the further additional torque, wherein in a second pass (D2) a further setpoint assistance torque (SUMb) is determined by means of the assistance function exclusively in dependence on the manual steering torque (HLM),
wherein in a difference step (DS) a difference is determined between the further setpoint assistance torque (SUMb) and the first setpoint assistance torque (SUMa),
wherein a malfunction is detected in a comparison step (VS) if a sum of the difference and the further component (SUM2) of the first setpoint assistance torque (SUMa) is greater than a predetermined threshold value.

3. Method according to Claim 2, **characterized in that** the further additional torque is equal to the first additional torque (ZM).

4. Method according to one of Claims 1 to 3, **characterized in that** the first pass (D1) is carried out cyclically with a first frequency, and the second pass (D2) is carried out cyclically with a second frequency, wherein the first frequency is higher than the second frequency, wherein the second pass (D2) is carried out instead of the first pass (D1).

5. Method according to Claim 4, **characterized in that** the second frequency is 50 Hz.

6. Method according to one of Claims 1 to 5, **characterized in that** the setpoint assistance torque (SUM) is determined by means of an assistance function exclusively in dependence on the manual steering torque (HLM) if a malfunction is detected.

7. Device for monitoring the determination of an additional torque (ZM), wherein the device (1) comprises at least one apparatus for measuring a manual steering torque (HLM), an apparatus (3) for determining at least one additional torque (ZM), an apparatus (4) for determining a setpoint assistance torque (SUM), and a monitoring apparatus (5), wherein in a first pass (D1)
- a manual steering torque (HLM) can be measured,
- a first additional torque (ZM) can be determined,
- a first setpoint assistance torque (SUMa) can be determined in dependence on a sum of the manual steering torque (HLM) and of the first additional torque (ZM),
**characterized in that**
- a difference between a further setpoint assistance torque (SUMb) and the first setpoint assistance torque (SUMa) can be determined by means of the monitoring apparatus (5), wherein the further setpoint assistance torque (SUMb) can be determined in a second pass (D2) exclusively in dependence on the manual steering torque (HLM), wherein a malfunction can be detected if the difference is greater than a predetermined threshold value.

8. Device for monitoring the determination of an additional torque (ZM), wherein the device (1) comprises at least one apparatus for measuring a manual steering torque (HLM), an apparatus (3) for determining at least one additional torque (ZM), an apparatus (4) for determining a setpoint assistance torque (SUM) and a monitoring apparatus (5), wherein in a first pass (D1)
- a manual steering torque (HLM) can be measured,
- a first additional torque (ZM) can be determined,
**characterized in that** the first setpoint assistance torque (SUMa) can be determined as a sum of a first component (SUM1) and of a further component (SUM2), wherein the first component (SUM1) can be determined in dependence on a sum of the manual steering torque (HLM) and of the first additional torque (ZM), wherein in the first pass (D1) a further additional torque and a further component (SUM2) of the first setpoint assistance torque (SUMa) can be determined as a product of a gain factor and of the further additional torque,
wherein in a second pass (D2) a further setpoint assistance torque (SUMb) is determined by means of the assistance function exclusively in dependence on the manual steering torque (HLM),
wherein in a difference step (DS) a difference can be determined between the further setpoint assistance torque (SUMb) and the first setpoint assistance torque (SUMa),
wherein in a comparison step (VS) a malfunction can be detected if a sum of the difference and of the further component (SUM2) of the first setpoint assistance torque (SUM) is greater than a predetermined threshold value.

9. Device according to one of Claims 7 or 8, **characterized in that** by means of the device (1) the first pass (D1) can be carried out cyclically with a first frequency, and the second pass (D2) can be carried out cyclically with a second frequency, wherein the first frequency is higher than the second frequency, wherein the second pass (D2) can be carried out instead of the first pass (D1).

## Revendications

1. Procédé de surveillance d'une détermination d'un couple additionnel (ZM), dans lequel dans une première étape (D1)
- on détecte le couple de direction manuel (HLM),
- on détermine un premier couple additionnel (ZM),
- dans lequel on détermine un premier couple de soutien de consigne (SUMa) au moyen d'une fonction de soutien en fonction d'une somme du couple de direction manuel (HLM) et du premier couple additionnel (ZM),
**caractérisé en ce que** dans une deuxième étape (D2)
- on détermine un autre couple de soutien de consigne (SUMb) au moyen de la fonction de soutien en fonction exclusivement du couple de direction manuel (HLM),
- dans lequel on détermine une différence entre l'autre couple de soutien de consigne (SUMb) et le premier couple de soutien de consigne (SUMa),
- dans lequel on détecte un fonctionnement défectueux, dans le cas où la différence est supérieure à une valeur de seuil prédéterminée.

2. Procédé de surveillance d'une détermination d'un couple additionnel (ZM), dans lequel dans une première étape (D1)
- on détecte un couple de direction manuel (HLM),
- on détermine un premier couple additionnel (ZM), **caractérisé en ce que**
on détermine un premier couple de soutien de consigne (SUMa) comme la somme d'une première fraction (SUM1) et d'une autre fraction (SUM2),
dans lequel on détermine la première fraction (SUM1) au moyen d'une fonction de soutien en fonction d'une somme du couple de direction manuel (HLM) et du premier couple additionnel (ZM),
dans lequel on détermine dans la première étape (D1) un autre couple additionnel,
dans lequel on détermine l'autre fraction (SUM2) du premier couple de soutien de consigne (SUMa) comme le produit d'un facteur d'amplification et de l'autre couple additionnel,
dans lequel dans une deuxième étape (D2) on détermine un autre couple de soutien de consigne (SUMb) au moyen de la fonction de soutien en fonction exclusivement du couple de direction manuel (HLM),
dans lequel dans une étape de différence (DS) on détermine une différence entre l'autre couple de soutien de consigne (SUMb) et le premier couple de soutien de consigne (SUMa),
dans lequel on détecte un fonctionnement défectueux dans une étape de comparaison (VS), dans le cas où une somme de la différence et de l'autre fraction (SUM2) du premier couple de soutien de consigne (SUMa) est supérieure à une valeur de seuil prédéterminée.

3. Procédé selon la revendication 2, **caractérisé en ce que** l'autre couple additionnel est égal au premier couple additionnel (ZM).

4. Procédé selon l'une quelconque des revendications 1 à 3, **caractérisé en ce que** l'on exécute la première étape (D1) de façon cyclique avec une première fréquence et la deuxième étape (D2) de façon cyclique avec une deuxième fréquence, dans lequel la première fréquence est plus élevée que la deuxième fréquence, dans lequel on exécute la deuxième étape (D2) au lieu de la première étape (D1).

5. Procédé selon la revendication 4, **caractérisé en ce que** la deuxième fréquence vaut 50 Hz.

6. Procédé selon l'une quelconque des revendications 1 à 5, **caractérisé en ce que** l'on détermine le couple de soutien de consigne (SUM) au moyen de la fonction de soutien exclusivement en fonction du couple de direction manuel (HLM), dans le cas où on détecte un fonctionnement défectueux.

7. Dispositif de surveillance d'une détermination d'un couple additionnel (ZM), dans lequel le dispositif (1) comprend au moins un dispositif pour la détection d'un couple de direction manuel (HLM), un dispositif (3) pour la détermination d'au moins un couple additionnel (ZM), un dispositif (4) pour la détermination d'un couple de soutien de consigne (SUM) et un dispositif de surveillance (5), dans lequel dans une première étape (D1)
- un couple de direction manuel (HLM) peut être détecté,
- un premier couple additionnel (ZM) peut être déterminé,
- un premier couple de soutien de consigne (SUMa) peut être déterminé en fonction d'une somme du couple de direction manuel (HLM) et du premier couple additionnel (ZM),
**caractérisé en ce que**
- une différence entre un autre couple de soutien de consigne (SUMb) et le premier couple de soutien de consigne (SUMa) peut être déterminée au moyen du dispositif de surveillance (5), dans lequel l'autre couple de soutien de consigne (SUMb) peut être déterminé dans une deuxième étape (D2) en fonction exclusivement du couple de direction manuel (HLM), dans lequel un fonctionnement défectueux peut être détecté, dans le cas où la différence est supérieure à une valeur de seuil prédéterminée.

8. Dispositif de surveillance d'une détermination d'un couple additionnel (ZM), dans lequel le dispositif (1) comprend au moins un dispositif pour la détection d'un couple de direction manuel (HLM), un dispositif (3) pour la détermination d'au moins un couple additionnel (ZM), un dispositif (4) pour la détermination d'un couple de soutien de consigne (SUM) et un dispositif de surveillance (5), dans lequel dans une première étape (D1)
- un couple de direction manuel (HLM) peut être détecté,
- un premier couple additionnel (ZM) peut être déterminé,
**caractérisé en ce que** le premier couple de soutien de consigne (SUMa) peut être déterminé comme la somme d'une première fraction (SUM1) et d'une autre fraction (SUM2),
dans lequel la première fraction (SUM1) peut être déterminée en fonction d'une somme du couple de direction manuel (HLM) et du premier couple additionnel (ZM),
dans lequel dans la première étape (D1) un autre couple additionnel et une autre fraction (SUM2) du premier couple de soutien de consigne (SUMa) peut être déterminé comme le produit d'un facteur d'amplification et de l'autre couple additionnel,
dans lequel dans une deuxième étape (D2) on détermine un autre couple de soutien de consigne (SUMb) au moyen de la fonction de consigne en fonction exclusivement du couple de direction manuel (HLM),
dans lequel dans une étape de différence (DS) une différence entre l'autre couple de soutien de consigne (SUMb) et le premier couple de soutien de consigne (SUMa) peut être déterminée,
dans lequel dans une étape de comparaison (VS) un fonctionnement défectueux peut être détecté, dans le cas où une somme de la différence et de l'autre fraction (SUM2) du premier couple de soutien de consigne (SUM) est supérieure à une valeur de seuil prédéterminée.

9. Dispositif selon une des revendications 7 ou 8, **caractérisé en ce que** la première étape (D1) peut être exécutée de façon cyclique avec une première fréquence et la deuxième étape (D2) peut être exécutée de façon cyclique avec une deuxième fréquence au moyen du dispositif (1), dans lequel la première fréquence est plus élevée que la deuxième fréquence, dans lequel la deuxième étape (D2) peut être exécutée au lieu de la première étape (D1).
